# EUROPÄISCHE PATENTSCHRIFT

(11) **EP 2 900 435 B1**
(45) Veröffentlichungstag und Bekanntmachung des Hinweises auf die Patenterteilung: **19.07.2017**
(21) Anmeldenummer: 13782983.4
(22) Anmeldetag: 24.09.2013
(51) Int. Cl.: B25J 15/00

(54) **VERFAHREN ZUM BETRIEB EINER GREIFVORRICHTUNG SOWIE ELEKTROSTATISCHE GREIFVORRICHTUNG**
METHOD FOR OPERATING A GRIPPING DEVICE AND ELECTROSTATIC GRIPPING DEVICE
MÉTHODE POUR FAIRE FONCTIONNER UN DISPOSITIF DE PRÉHENSION ET DISPOSITIF DE PRÉHENSION ELECTROSTATIC

(30) Priorität: 26.09.2012 DE 102012109073
(43) Veröffentlichungstag der Anmeldung: 05.08.2015
(73) Patentinhaber: Fraunhofer Gesellschaft zur Förderung der angewandten Forschung e.V., 80686 München (DE)
(72) Erfinder: BRECHER, Christian, 52074 Aachen (DE); EMONTS, Michael, 52134 Herzogenrath (DE); OZOLIN, Boris, 86157 Augsburg (DE); WERNER, Daniel, 50129 Bergheim (DE)
(74) Vertreter: Naeven, Ralf
(86) Internationale Anmeldenummer: PCT/EP2013/069840
(87) Internationale Veröffentlichungsnummer: WO 2014/048916

(56) Entgegenhaltungen:
- EP-A1- 1 998 365
- EP-A2- 0 297 227
- DE-U1-202009 000 083
- US-A1- 2011 193 362

## Beschreibung

Die Erfindung betrifft ein Verfahren zum Betrieb einer Greifvorrichtung unter Einsatz elektrostatischer Kräfte gemäß dem Oberbegriff des Anspruchs 1 sowie eine elektrostatische Greifvorrichtung gemäß dem Oberbegriff des Anspruchs 9 oder des Anspruchs 10.

Das automatisierte Greifen und anschließende Transportieren und Ablegen von Werkstücken, insbesondere als Teilprozess im Zuge einer automatisierten Handhabung oder Verarbeitung eines Werkstückes, kommt in verschiedensten Ausgestaltungen mannigfach zur Ausführung. Je nach Art des zu greifenden Werkstückes kommen, z. B. zum Schutz empfindlicher Oberflächen, mechanische Greifvarianten nicht in Frage. Der Begriff Werkstück umfasst sowohl unbearbeitete als auch bearbeitete Werkstücke oder Halbzeuge. Ein besonderes Problemfeld bilden biegeschlaffe und/oder deformierbare Werkstücke. Hierfür sind z. B. Nadelgreifer bekannt, die mit schräggestellten Nadeln das Greifgut zumindest zum Teil durchdringen, was je nach Werkstück ungewünscht sein kann. Des Weiteren sind Vakuumgreifer bekannt, die jedoch bei luftdurchlässigem Greifgut oft große Leckagenvolumenströme aufweisen, welche zu einer hohen Energieaufnahme und in Folge dessen zu einer Unwirtschaftlichkeit des Prinzips führen können.

Vakuumgreifer und auch Nadelgreifer lassen sich in der Regel nur erschwert an unterschiedliche Oberflächen anpassen.

Aus der DE 20 2009 000 083 U1 sind ein Verfahren sowie eine elektrostatische Greifeinrichtung der eingangs genannten Art zum Handhaben von flexiblem Flächenmaterial bekannt. Dort ist ein starres Greifelement aus einer Kunststoffplatte offenbart, das mittels eines elektrostatischen Ladungssystems ein elektrostatisches Feld aufbaut, welches auf ein Werkstück aus einem geeigneten Material anziehend wirkt. Die Wirkmechanismen des elektrostatischen Prinzips sind hinreichend bekannt (siehe z. B. Hyeon-Seok Oh; "elektrostatische Greifer für die Mikromontage", Fortschritt-Berichte VDI: Reihe 8, Mess-, Steuerungs- und Regelungstechnik VDI-Verlag, 1998). Aus der DE 10 2006 060 361 A1 sind ebenfalls ein Verfahren sowie eine elektrostatische Greifvorrichtung der eingangs genannten Art bekannt, wobei dort der Transportgreifer die Form eines Rollkörpers aufweist und ebenfalls zum Greifen von Flächenmaterial dient. Beim Greifprozess wird das Flächenmaterial von der Umfangsfläche des Rollkörpers aufgenommen und kann dabei an die Form des Rollkörperumfangs angepasst werden. Es ist offenbart, den Rollkörper an der Abrollfläche mit einer Vielzahl von Elektroden zu versehen, die zur Erzeugung einer das Flächenmaterial an der Abrollfläche haltenden elektrostatischen Kraft dienen. Es ist des Weiteren offenbart, beim Ablegen des Flächenmaterials über einer Zielform die elektrostatische Anziehungskraft jeweils in dem Bereich des Rollkörpers zu deaktivieren, der die Zielform berührt.

Aus der WO 2008 070201 A2 ist eine elektrostatisch wirkende Einheit bekannt, die vorzugsweise dafür eingesetzt wird, die Bewegung entlang senkrecht stehender Wände zu ermöglichen. Die elektrostatische Vorrichtung kann dabei eine Vielzahl von Elektroden umfassen, die untereinander unterschiedliche Potenzialdifferenzen aufweisen. Es ist des Weiteren offenbart, zur Erhöhung der Geschwindigkeit des Ablöseprozesses die Polarität der Elektroden bei einer konstanten Rate zu wechseln.

Im Zusammenhang mit elektrostatischen Greifern stellt das Ablösen des gegriffenen Werkstückes eine Herausforderung dar. Beruht die Haftung zwischen dem Greifelement und dem Werkstück beispielsweise auf induzierter Orientierungspolarisation, so bleibt die Polarisation und damit auch die Haftung über einen gewissen Zeitraum bestehen, auch wenn das Feld, welche die Orientierung ausgelöst hat, abgeschaltet wird. Die Orientierungspolarisation reduziert sich erst durch thermische Stöße über einen gegebenenfalls längeren Zeitraum.

Aus der US 2011/0193362 A1 sind ein Verfahren gemäß dem Oberbegriff des Anspruchs 1 sowie eine elektrostatische Greifeinheit gemäß dem Oberbegriff des Anspruchs 9 oder des Anspruchs 10 bekannt. Demnach wird beim Ablegen eines gegriffenen Werkstückes der Absolutwert der Potentialdifferenz zwischen den Elektroden verringert, wobei mindestens einmal das Vorzeichen der Potentialdifferenz gewechselt werden kann. Entsprechendes offenbart auch die EP 1 998 365 A1. Durch das Absenken der Potenzialdifferenz wird die elektrostatische Kraft zwischen dem Greifelement und dem Werkstück verringert. Durch den Vorzeichenwechsel reduziert sich die Orientierungspolarisation, so dass insgesamt eine verkürzte Ablegezeit erreicht werden kann.

Es ist nun Aufgabe der Erfindung, ein Verfahren sowie eine Greifvorrichtung der eingangs genannten Art zur Verfügung zu stellen, welche zusätzliche Funktionen ermöglichen.

Bei einem Verfahren der eingangs genannten Art wird dieses Problem mit den kennzeichnenden Merkmalen des Anspruchs 1 gelöst. Bevorzugte Ausführungsbeispiele des erfindungsgemäßen Verfahrens ergeben sich aus den Ansprüchen 2 bis 8.

Demnach wird ein gegriffenes Werkstück mittels elektromagnetischer Induktion erwärmt, wobei zur Erzeugung des für die Induktion notwendigen elektromagnetischen Wechselfeldes mindestens eine in oder an der Greifvorrichtung angeordnete geschlossene Leiterschleife verwendet wird.

Auf diese Weise können der Greifvorgang und die Erwärmungsbehandlung des Werkstückes kombiniert werden. Eine gesonderte Vorrichtung zur Erwärmung des Werkstückes ist nicht erforderlich.

Die geschlossene Leiterschleife kann neben dem mindestens einen für die Aufrechterhaltung der elektrostatischen Kräfte notwendigen Elektrodenpaar vorgesehen sein. Es ist allerdings auch denkbar, ein im oder am Greifelement angeordnetes Leiterelement, welches zunächst als Elektrode zum Aufbau der elektrostatischen Kräfte verwendet wird, als Teil einer geschlossenen Leiterschleife zu schalten. Soll in diesem Fall die Erwärmung durchgeführt werden, während das Werkstück durch den Greifer gehalten wird, ist die geschlossene Leiterschleife mit dem zum Aufbau der elektrostatischen Anziehung notwendigen Hochvoltpotenzial zu versehen, dem für die Induktionserwärmung eine hochfrequente Wechselspannung zu überlagern ist. Des Weiteren ist es möglich, eines oder mehrere der Leiterelemente zeitlich nacheinander zum Einen als Teil eines Elektrodenpaars für das elektrostatische Greifen und zum Anderen als Teil einer geschlossenen Leiterschleife zur induktiven Erwärmung zu nutzen. Während der induktiven Erwärmung kann das Werkstück zum Beispiel noch nicht gegriffen oder abgelegt sein oder auch aufgrund bestehender Restpolarität noch am Greifelement hängen.

Es ist aber auch möglich, neben der geschlossenen Leiterschleife ein separat angesteuertes Elektrodenpaar zur Erzeugung des elektrostatischen Feldes einzusetzen.

Das Absenken des Absolutwertes der Potentialdifferenz kann allmählich oder vorteilhaft in diskreten Schritten geschehen. Der Vorzeichenwechsel kann durch Anlegen einer Wechselspannung erfolgen, wobei die Effektivspannung allmählich oder in diskreten Schritten abgesenkt wird. Der Vorzeichenwechsel kann aber auch durch Schaltvorgänge erzeugt werden. Der Vorzeichenwechsel kann z.B. bei jedem Schritt zur Absenkung des Absolutwertes der Potentialdifferenz durchgeführt werden. Die Anzahl der Schritte zur Absenkung des Absolutwertes der Potentialdifferenz oder des Effektivwertes der Spannung kann z.B. zwei, drei, vier oder mehr betragen.

Des Weiteren kann es vorteilhaft sein, ein zweites Elektrodenpaar oder auch weitere Elektrodenpaare vorzusehen. Mit jedem Elektrodenpaar kann jeweils eine Potenzialdifferenz zur Erzeugung elektrostatischer Kräfte eingesetzt werden. Die Elektrodenpaare können in verschiedenen Bereichen des Greifelements wirksam werden, so dass eine Segmentierung des Greifelements in unterschiedliche Greifzonen möglich ist.

Dabei kann es sinnvoll sein, mindestens zwei der Elektrodenpaare separat anzusteuern.

Insbesondere kann im Falle mindestens zweier Elektrodenpaare der Ablegeprozess flexibler gestaltet werden. Es ist z. B. möglich, bei einem der Elektrodenpaare den Absolutwert der Potenzialdifferenz unter Wechsel seines Vorzeichens abzusenken und das andere Elektrodenpaar ohne Wechsel des Vorzeichens zu betreiben, z. B. bei konstanter Potenzialdifferenz. Damit kann gewährleistet werden, dass auch bei Wechsel des Vorzeichens beim ersten Elektrodenpaar durch das zweite Elektrodenpaar noch eine für das Halten des Werkstückes hinreichende elektrostatische Kraft aufrechterhalten wird. Auf diese Weise kann das Ablegen sanft gestaltet werden. Ein unbeabsichtigtes Ablösen des Werkstückes beim Wechsel des Vorzeichens kann so vermieden werden. Es kann auch vorteilhaft sein, den Betrag der Potenzialdifferenz an dem ohne Wechsel des Vorzeichens betriebenen Elektrodenpaar während des Ablegeprozesses schrittweise oder stetig abzusenken.

Das erfindungsgemäße Verfahren kann auch so ausgeführt werden, dass ein gegriffenes Werkstück verformt wird, indem ein formflexibles Greifelement eingesetzt und das Greifelement selbst ebenfalls verformt wird. Die Verformung kann manuell oder maschinell durchgeführt werden. Das Werkstück kann für die Verformung erwärmt worden sein. Die Verformung kann plastisch, elastisch oder elasto-plastisch sein. Bei zumindest teilplastischer Verformung verbleibt das abgelegte Werkstück in einer zum Ausgangszustand veränderten Form. Auch elastische Verformungen können sinnvoll sein, z.B. um das Werkstück verformt in eine entsprechend geformte Aufnahme abzulegen.

Des Weiteren kann das erfindungsgemäße Verfahren zur Erzeugung eines Elektrets genutzt werden, indem ein gegriffenes oder nach dem Greifen abgelegtes Werkstück, welches sich im Prozess des Abkühlens befindet, einem mittels der Greifvorrichtung erzeugten elektrischen Feld ausgesetzt wird.

Die Erwärmung des so zu behandelnden Werkstückes kann vor oder während des Greifvorganges durch eine separate Vorrichtung, z. B. durch Wärmeleitung oder Induktion durchgeführt werden. Für die Erwärmung kann jedoch auch bei entsprechender Ausstattung das Greifelement selbst in der oben angesprochenen Art und Weise unter Nutzung der Induktion eingesetzt werden.

Bei einer elektrostatischen Greifvorrichtung der eingangs genannten Art wird die vorgenannte Aufgabe gelöst mit den kennzeichnenden Merkmalen des unabhängigen Anspruchs 9 oder des unabhängigen Anspruchs 10.

Vorteilhafte Ausführungsbeispiele der erfindungsgemäßen Greifvorrichtung ergeben sich aus den abhängigen Ansprüchen 11 bis 15.

Die erfindungsgemäße Greifvorrichtung bildet ein Kombinationsinstrument, welches neben dem Greifen eines Werkstückes zur induktiven Erwärmung des Werkstückes und/oder zur Einbringung von quasi-permanent ausgerichteten elektrischen Dipolen im Werkstück, d.h. zur Erzeugung eines Elektrets eingerichtet werden kann.

Die Greifvorrichtung weist Mittel zur Mehrpotenzialsteuerung auf, die das Absenken des Absolutwertes der Potenzialdifferenz zwischen den Elektroden und den Vorzeichenwechsel ermöglichen, wodurch ein definiertes Loslassen erreicht werden kann. Das definierte Loslassen ist insbesondere auch vorteilhaft im Zusammenhang mit der erfindungsgemäßen Ausbildung der Greifvorrichtung zum Kombinationsinstrument.

Die Greifvorrichtung kann optional zur Verformung des Werkstückes eingerichtet werden.

Wird bei der Greifvorrichtung ein elektromagnetisches Wechselfeld eingesetzt, ist es vorteilhaft, zumindest eine Teilanzahl von Leiterelementen aus mindestens einer Leiterbahn mit gegeneinander isolierten Einzelleitern zu bilden. Auf diese Weise wird bei den notwendigen hohen Stromfrequenzen eine zu hohe Impedanz aufgrund des Skin-Effektes vermieden. Für das elektromagnetische Wechselfeld kann mindestens eine gesonderte Leiterschleife vorgesehen werden. Es kann aber auch vorgesehen werden, zumindest eine Teilanzahl der derartig ausgestalteten Leiterelemente sowohl als Elektrode zur Ausbildung eines elektrostatischen Feldes als auch als Teil einer geschlossenen Leiterschleife zur Erzeugung eines elektromagnetischen Wechselfeldes, z. B. für die elektromagnetische Induktion, einzusetzen. Zum Schließen der Leiterschleife kann ein elektrischer Schalter eingesetzt werden.

Des Weiteren kann es vorteilhaft sein, im Greiferelement einen kapazitiven Näherungssensor vorzusehen. Dies kann das automatische Greifen eines Werkstückes und auch das Ablegen erleichtern. Der Näherungssensor kann sowohl für die Annäherung an das Werkstück als auch zur Feststellung der Annäherung an eine Ablegestelle verwendet werden.

Durch die Kombination mehrerer oder aller oben dargestellten

Ausbildungsmöglichkeiten der Greifvorrichtung wird ein höchst flexibles und vielseitig einsetzbares Werkzeug, z.B. zum Greifen flächiger Werkstücke, insbesondere auch biegeschlaffer Werkstücke, zur Verfügung gestellt.

Im Folgenden werden anhand von Figuren vorteilhafte Ausbildungsformen der erfindungsgemäßen Greifvorrichtung sowie Ausführungsvarianten des erfindungsgemäßen Verfahrens dargestellt.

Es zeigen schematisch
- Fig. 1:: ein plattenförmiges Greifelement mit einem verschachtelten Elektrodenpaar,
- Fig. 2:: ausschnittsweise ein Greifelement mit veranschaulichten elektrostatischen Feldern,
- Fig. 3:: ausschnittsweise ein Greifelement mit eine Vielzahl von Einzelleitern aufweisenden Leiterelementen und
- Fig. 4:: eine Leiterelement mit Einzelleitern und Kontaktelementen.

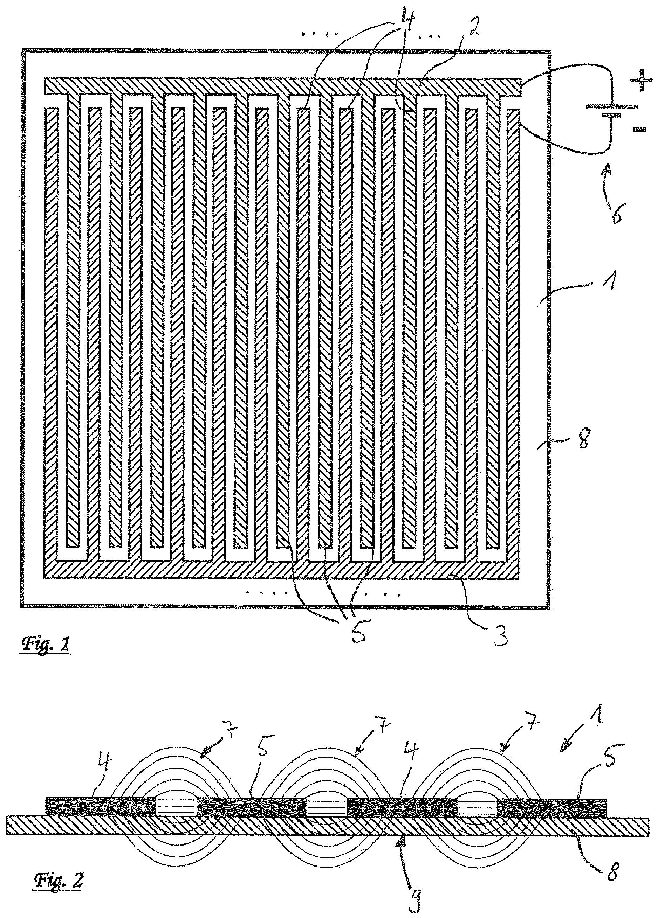

Fig. 1 zeigt schematisch in Aufsicht ein Greifelement 1 mit zwei Leiterelementen 2 und 3 mit ineinander verschachtelten Leiterarmen 4 bzw. 5. Die Leiterelemente 2 und 3 sind an eine Gleichspannungsquelle 6 angeschlossen, die hier nur symbolisch dargestellt ist und dienen in der dargestellten Verschaltung als Elektroden.

Fig. 2 zeigt das Greifelement 1 gemäß Fig. 1 ausschnittsweise im Querschnitt. In den Leiterarmen 4 bzw. 5 sind in Fig. 2 die Polungsvorzeichen angegeben. Zwischen den Leiterarmen 4 und 5 erstrecken sich symbolisch dargestellte Feldlinien 7 des durch die Leiterarme 2 und 3 aufgebauten elektrostatischen Feldes. Eine Basiseinheit 8 des Greifelements 1 trägt die Leiterelemente 2 und 3. Die Feldlinien 7 treten durch die Basiseinheit 8 hindurch, so dass eine elektrostatische Anziehungskraft auch auf einer der die Leiterelemente 2 und 3 tragenden Seite gegenüberliegenden Greifseite 9 vorhanden ist.

Die flächige Form des Greifelements 1 ist insbesondere vorteilhaft für flächige Werkstücke, insbesondere auch für biegeschlaffe Werkstücke.

Die Basiseinheit 8 kann verformbar sein, z. B. plastisch verformbar, um ein mit dem Greifelement 1 gegriffenes flächiges Werkstück zusammen mit der Basiseinheit 8 verformen zu können. Das vom Greifelement 1 gehaltene Werkstück kann z.B. plastisch oder elastisch verformbar sein.

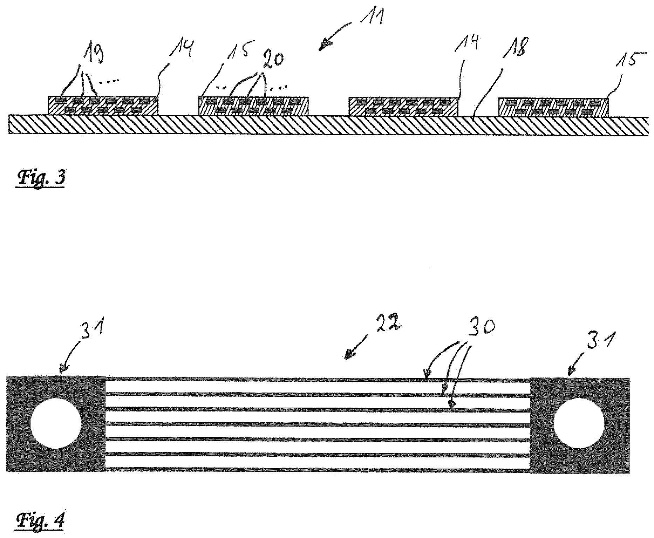

Fig. 3 zeigt ein weiteres Greifelement 11 mit einer Basiseinheit 18 und auf der Basiseinheit 18 angeordneten Leiterarmen 14 und 15. Die Leiterarme 14 und 15 sind jeweils aus gegeneinander isolierten Einzelleitern 19 bzw. 20 aufgebaut. In diesem Fall können die aus den Leiterarmen 14 und 15 gebildeten Leiterelemente für die Durchleitung hochfrequenter Wechselströme genutzt werden. In ein hier nicht dargestelltes mit dem Greifelement 11 gegriffenes Werkstück können über die Leiterarme 14 und 15 auf diese Weise elektrische Wirbelströme zur Erwärmung des Werkstückes erzeugt werden. Hierfür müssen die beteiligten Leiterarme zu geschlossenen Leiterschleifen gehören.

Die geschlossenen Leiterkreise können aus den Leiterarmen 14 und/oder 15 durch einen Schaltvorgang gebildet werden. Die geschlossenen Leiterkreise können aber auch zusätzlich zu weiteren für die elektrostatischen Felder verantwortlichen Elektroden auf der Basiseinheit 18 angeordnet sein.

Fig. 4 zeigt beispielhaft ein Leiterelement 22 mit voneinander getrennten Einzelleitern 30, die jeweils von Anschlussstücken 31 ausgehen, welche zur elektrischen Kontaktierung dienen. Wird das Leiterelement 22 als Elektrode für den Greifprozess genutzt, wird nur eines der Anschlussstücke 31 elektrisch kontaktiert.

### Bezugszeichenliste

- 1: Greifelement
- 2: Leiterelement
- 3: Leiterelement
- 4: Leiterarm
- 5: Leiterarm
- 6: Gleichspannungsquelle
- 7: Feldlinien
- 8: Basiseinheit
- 9: Greifseite
- 11: Greifelement
- 14: Leiterarm
- 15: Leiterarm
- 18: Basiseinheit
- 19: Einzelleiter
- 20: Einzelleiter
- 22: Leiterelement
- 30: Einzelleiter
- 31: Anschlussstück

## Patentansprüche

1. Verfahren zum Betrieb einer Greifvorrichtung unter Einsatz elektrostatischer Kräfte, bei dem
für einen Greifvorgang zwischen Elektroden eines in einem Greifelement (1, 11) der Greifvorrichtung angeordneten Elektrodenpaares eine Potenzialdifferenz erzeugt wird, wobei
zum Ablegen eines gegriffenen Werkstückes der zwischen den Elektroden gegebene Absolutwert der Potenzialdifferenz verringert und dabei das Vorzeichen der Potenzialdifferenz mindestens einmal gewechselt wird,
**dadurch gekennzeichnet, dass**
das Werkstück mittels elektromagnetischer Induktion erwärmt wird, wobei zur Erzeugung des elektromagnetischen Wechselfeldes mindestens eine in oder an der Greifvorrichtung angeordnete geschlossene Leiterschleife verwendet wird, durch die ein hochfrequenter Wechselstrom durchgeleitet wird.

2. Verfahren nach Anspruch 1, **dadurch gekennzeichnet, dass** mindestens ein Elektrodenpaar zu der geschlossenen Leiterschleife geschaltet wird.

3. Verfahren nach Anspruch 1 oder 2, **dadurch gekennzeichnet, dass** der Absolutwert der Potenzialdifferenz in diskreten Schritten gesenkt wird.

4. Verfahren nach einem der vorhergehenden Ansprüche, **dadurch gekennzeichnet, dass** mindestens ein weiteres Elektrodenpaar zur Erzeugung der elektrostatischen Anziehungskraft eingesetzt wird.

5. Verfahren nach Anspruch 4, **dadurch gekennzeichnet, dass** mindestens zwei der Elektrodenpaare separat angesteuert werden.

6. Verfahren nach einem der vorhergehenden Ansprüche, **dadurch gekennzeichnet, dass** ein formflexibles Greifelement (1, 11) eingesetzt und mittels Verformung des Greifelements (1, 11) ein gegriffenes Werkstück verformt wird.

7. Verfahren nach einem der vorhergehenden Ansprüche, **dadurch gekennzeichnet, dass** zur Erzeugung eines Elektrets ein Werkstück, welches sich im Prozess des Abkühlens befindet, einem mittels der Greifvorrichtung erzeugten elektrischen Feld ausgesetzt wird.

8. Verfahren nach einem der vorhergehenden Ansprüche, **dadurch gekennzeichnet, dass** es zum Greifen biegeschlaffer Materialien eingesetzt wird.

9. Elektrostatische Greifvorrichtung, umfassend ein Greifelement (1, 11) mit einem Elektrodenpaar, Mittel zur Erzeugung einer Potenzialdifferenz zwischen den Elektroden des Elektrodenpaares sowie Mittel zum Absenken des zwischen den Elektroden gegebene Absolutwerts der Potenzialdifferenz und zum Wechseln des Vorzeichens der Potenzialdifferenz
**dadurch gekennzeichnet, dass** das Greifelement (1, 11) zusätzlich zum mindestens einen Elektrodenpaar eine geschlossene Leiterschleife aufweist.

10. Elektrostatische Greifvorrichtung, umfassend ein Greifelement (1, 11) mit einem Elektrodenpaar, Mittel zur Erzeugung einer Potenzialdifferenz zwischen den Elektroden des Elektrodenpaares sowie Mittel zum Absenken des zwischen den Elektroden gegebene Absolutwerts der Potenzialdifferenz und zum Wechseln des Vorzeichens der Potenzialdifferenz
**dadurch gekennzeichnet, dass**
mindestens ein Elektrodenpaar zu einer geschlossenen Leiterschleife schaltbar ist.

11. Greifvorrichtung nach Anspruch 9 oder 10, **dadurch gekennzeichnet, dass** im Greifelement (1, 11) mindestens ein weiteres Elektrodenpaar angeordnet ist und mindestens zwei der Elektrodenpaare separat ansteuerbar sind.

12. Greifvorrichtung nach einem der Ansprüche 9 bis 11, **dadurch gekennzeichnet, dass** das Greifelement (1, 11) formflexibel ist.

13. Greifvorrichtung nach einem der Ansprüche 9 bis 12, **gekennzeichnet durch** Mittel zur Erzeugung eines elektromagnetischen Wechselfeldes.

14. Greifvorrichtung nach einem der Ansprüche 9 bis 13, **dadurch gekennzeichnet, dass** zumindest eine Teilanzahl der Elektroden aus mindestens einer Leiterbahn mit gegeneinander isolierten Einzelleitern (19, 20, 30) gebildet ist.

15. Greifvorrichtung nach einem der Ansprüche 9 bis 14, **gekennzeichnet durch** mindestens einen kapazitiven Näherungssensor im Greifelement (1, 11).

## Claims

1. Method for operating a gripping device by using electrostatic forces, in which,
for a gripping operation, a potential difference is produced between electrodes of an electrode pair arranged in a gripping element (1, 11) of the gripping device,
wherein
in order to deposit a gripped workpiece, the absolute value of the potential difference provided between the electrodes is reduced and the sign of the potential difference is changed at least once,
**characterized in that**
the workpiece is heated by means of electromagnetic induction, wherein at least one closed conductor loop arranged in or on the gripping device is used to produce the alternating electromagnetic field, through which closed conductor loop a high-frequency alternating current is led.

2. Method according to Claim 1, **characterized in that** at least one electrode pair is connected to form the closed conductor loop.

3. Method according to Claim 1 or 2, **characterized in that** the absolute value of the potential difference is lowered in discrete steps.

4. Method according to one of the preceding claims, **characterized in that** at least one further electrode pair is used to produce the electrostatic attraction force.

5. Method according to Claim 4, **characterized in that** at least two of the electrode pairs are driven separately.

6. Method according to one of the preceding claims, **characterized in that** a flexible-shape gripping element (1, 11) is used, and a gripped workpiece is deformed by means of deforming the gripping element (1, 11).

7. Method according to one of the preceding claims, **characterized in that**, to produce an electret, a workpiece which is in the cooling process is subjected to an electric field produced by means of the gripping device.

8. Method according to one of the preceding claims, **characterized in that** it is used to grip flexible materials.

9. Electrostatic gripping device, comprising a gripping element (1, 11) with an electrode pair, means for producing a potential difference between the electrodes of the electrode pair and means for lowering the absolute value of the potential difference provided between the electrodes and for changing the sign of the potential difference,
**characterized in that**
the gripping element (1, 11) has a closed conductor loop in addition to the at least one electrode pair.

10. Electrostatic gripping device, comprising a gripping element (1, 11) with an electrode pair, means for producing a potential difference between the electrodes of the electrode pair and means for lowering the absolute value of the potential difference provided between the electrodes and for changing the sign of the potential difference,
**characterized in that**
at least one electrode pair can be connected to form a closed conductor loop.

11. Gripping device according to Claim 9 or 10, **characterized in that** at least one further electrode pair is arranged in the gripping element (1, 11), and at least two of the electrode pairs can be driven separately.

12. Gripping device according to one of Claims 9 to 11, **characterized in that** the gripping element (1, 11) is flexible in shape.

13. Gripping device according to one of Claims 9 to 12, **characterized by** means for producing an alternating electromagnetic field.

14. Gripping device according to one of Claims 9 to 13, **characterized in that** at least a partial number of the electrodes is formed from at least one conductor track with mutually insulated individual conductors (19, 20, 30).

15. Gripping device according to one of Claims 9 to 14, **characterized by** at least one capacitive proximity sensor in the gripping element (1, 11).

## Revendications

1. Procédé pour faire fonctionner un dispositif de préhension en faisant appel à des forces électrostatiques, selon lequel
pour une opération de préhension, une différence de potentiel est générée entre les électrodes d'une paire d'électrodes disposées dans un élément de préhension (1, 11) du dispositif de préhension,
la valeur absolue de la différence de potentiel appliquée entre les électrodes étant réduite pour déposer une pièce saisie et le signe de la différence de potentiel étant changé au moins une fois à cette occasion,
**caractérisé en ce que**
la pièce est chauffée par induction électromagnétique, au moins une boucle conductrice fermée, à travers laquelle est mis à circuler un courant alternatif à haute fréquence et disposée dans ou sur le dispositif de préhension, étant utilisée pour la génération du champ alternatif électromagnétique.

2. Procédé selon la revendication 1, **caractérisé en ce qu'**au moins une paire d'électrodes est commutée pour former la boucle conductrice fermée.

3. Procédé selon la revendication 1 ou 2, **caractérisé en ce que** la valeur absolue de la différence de potentiel est abaissée par paliers discrets.

4. Procédé selon l'une des revendications précédentes, **caractérisé en ce qu'**au moins une paire d'électrodes supplémentaire est utilisée pour générer la force d'attraction électrostatique.

5. Procédé selon la revendication 4, **caractérisé en ce qu'**au moins deux des paires d'électrodes sont excitées séparément.

6. Procédé selon l'une des revendications précédentes, **caractérisé en ce qu'**un élément de préhension (1, 11) à flexibilité de forme est utilisé et une pièce saisie est déformée par déformation de l'élément de préhension (1, 11).

7. Procédé selon l'une des revendications précédentes, **caractérisé en ce qu'**en vue de produire un électret, une pièce qui se trouve dans le processus de refroidissement est exposée à un champ électrique généré au moyen du dispositif de préhension.

8. Procédé selon l'une des revendications précédentes, **caractérisé en ce qu'**il est utilisé pour la préhension de matériaux souples.

9. Dispositif de préhension électrostatique, comprenant un élément de préhension (1, 11) pourvu d'une paire d'électrodes, des moyens pour générer une différence de potentiel entre les électrodes de la paire d'électrodes ainsi que des moyens pour abaisser la valeur absolue de la différence de potentiel présente entre les électrodes et pour changer le signe de la différence de potentiel,
**caractérisé en ce que** l'élément de préhension (1, 11) possède une boucle conductrice fermée en plus de l'au moins une paire d'électrodes.

10. Dispositif de préhension électrostatique, comprenant un élément de préhension (1, 11) pourvu d'une paire d'électrodes, des moyens pour générer une différence de potentiel entre les électrodes de la paire d'électrodes ainsi que des moyens pour abaisser la valeur absolue de la différence de potentiel présente entre les électrodes et pour changer le signe de la différence de potentiel,
**caractérisé en ce qu'**au moins une paire d'électrodes peut être commutée pour former une boucle conductrice fermée.

11. Dispositif de préhension selon la revendication 9 ou 10, **caractérisé en ce qu'**au moins une paire d'électrodes supplémentaire est disposée dans l'élément de préhension (1, 11) et au moins deux des paires d'électrodes peuvent être excitées séparément.

12. Dispositif de préhension selon l'une des revendications 9 à 11, **caractérisé en ce que** l'élément de préhension (1, 11) possède une flexibilité de forme.

13. Dispositif de préhension selon l'une des revendications 9 à 12, **caractérisé par** des moyens destinés à générer un champ alternatif électromagnétique.

14. Dispositif de préhension selon l'une des revendications 9 à 13, **caractérisé en ce qu'**au moins un nombre partiel des électrodes est formé par au moins une piste conductrice avec des conducteurs individuels (19, 20, 30) isolés les uns des autres.

15. Dispositif de préhension selon l'une des revendications 9 à 14, **caractérisé par** au moins un détecteur d'approche capacitif dans l'élément de préhension (1, 11).
